# EUROPEAN PATENT SPECIFICATION

(11) **EP 1 582 874 B1**
(45) Date of publication and mention of the grant of the patent: **09.07.2008**
(21) Application number: 04007764.6
(22) Date of filing: 31.03.2004
(51) Int. Cl.: G01N 35/02

(54) **Modular analysing apparatus**
Modulare Analysevorrichtung
Appareil modulaire pour analyses

(43) Date of publication of application: 05.10.2005
(73) Proprietor: Roche Diagnostics GmbH, 68305 Mannheim (DE); F. Hoffmann-La Roche AG, 4070 Basel (CH)
(72) Inventor: Vischer, Peter, 6403 Kuessnacht am Rigi (CH); Schorno, Reto, 6043 Adligenswil (CH); Bucher, Willi, 8915 Hausen a. Albis (CH)
(74) Representative: Poredda, Andreas

(56) References cited:
- EP-A- 0 990 906
- EP-A- 1 032 839
- WO-A-93/15407
- WO-A-98/01760
- WO-A-98/18009
- WO-A-99/15905
- US-A- 5 598 270
- US-B1- 6 325 114
- US-B1- 6 337 050
- US-B2- 6 669 432

## Description

The present invention is directed to a method for manufacturing an apparatus for conducting a multi-step analytical process comprising a transfer module, support modules and carrier elements, as well as the modular analytical apparatus and a collection of modules for manufacturing such analytical apparatus. The invention can be used particularly advantageous in the field of analytics, for example in health care.

### Background

Apparatus for conducting multi-step analytical processes have been known. In EP 1 032 839 there is disclosed an instrument providing handling units for different handling steps on a joint working area. However, future laboratories will have a need to employ high throughput instruments, i.e. instruments which can handle analysis of many samples in parallel. A further instrument is disclosed in EP 990 906. That discloses an apparatus for conducting a multi-step analytical process comprising an apparatus for isolating of nucleic acids from a sample, and another apparatus for amplifying and determining those nucleic acids. Those apparatus are linked by a transport module which carries the purified nucleic acids from an output position of the first apparatus to an input position of the second apparatus. As the functions of those two apparatuses are substantially different, the linking module is used to bring the samples from the first level to the second level.

US 6 337 050 discloses an apparatus assembled from a collection of modules according to the preamble of claim 1.

In very large laboratories frequently there is a multiplicity of apparatuses which have the same purpose, for instance for clinical chemistry detection, that are linked to a common distribution unit. In such a construction, there are transport units that lead from the distribution unit to each single detection unit. These modules are working autonomous and there is no joint transport unit for functional linkage of the instruments in series.

In clinical laboratories, the base surface generally may not be very planar. The surface may have elevations and depressions and in many cases it will be difficult to find a common plane such that the different modules fit together such that the samples can be carried safely from one apparatus to the other.

Therefore, there was a particular need for instruments, which allow high throughput analyses in multi-step processes, which can be easily and reliably assembled at the place of the future use.

### Subject of the invention

This object is solved by the present invention.

The first subject of this invention is a collection of modules for assembling an analytical apparatus for conducting a multi-step analytical process comprising
- at least two carrier elements which can be positioned adjacent on the ground,
- at least two support modules comprising tools adapted to keep the items to be subject to analysis and any means needed for the analysis,
- supports on each of said carrier elements for supporting each of said at least two support modules onto a carrier element,
- a transfer module designed to transfer items from one position to another position,
- carrier spots on the carrier elements for bearing the transfer module on the carrier elements and means for additionally fixing the transfer module to the carrier elements,
said collection of modules being characterized in that the supports for supporting the support modules onto the carrier elements are arranged so that the support modules are either firmly fixed to the carrier elements or released but still supported by the carrier elements via the supports when said firm fixation is unfastened and in that the support modules and the transfer module comprise corresponding integral engagement elements to exactly position and firmly connect said support modules in relation to said transfer module.

Another subject of the invention is an apparatus for conducting a multi-step analytical process assembled from the collection of modules according to the invention comprising
- at least two carrier elements which can be positioned adjacent on the ground,
- at least two support modules comprising tools adapted to keep the items to be subject to analysis and any means needed for the analysis,
- supports on each of said carrier elements for supporting each of said at least two support modules onto a carrier element,
- a transfer module designed to transfer items from one position on the apparatus to another position on the apparatus,
- carrier spots on the carrier elements for bearing the transfer module on the carrier elements and means for additionally fixing the transfer module to the carrier elements,
said apparatus being characterized in that the supports for supporting the support modules onto the carrier elements are arranged so that the support modules are either firmly fixed to the carrier elements or released but still supported by the carrier elements via the supports when said firm fixation is unfastened and in that the support modules and the transfer module comprise corresponding integral engagement elements to exactly position and firmly connect said support modules in relation to said transfer module,

Another subject of the invention is method for assembling the collection of modules according to the invention to form an analytical apparatus for conducting an analytical process, said method comprising the steps
- providing at least two support modules on supports of the at least two carrier elements,
- providing the transfer module and placing it onto carrier spots of the carrier elements, and
- firmly connecting said support modules to said transfer module.

Still another subject of the invention is method for multi-step analysis of a component of a sample using an apparatus assembled from the collection of modules according to the invention.

One possible advantage of present invention is that it eases multistep analyses. Another possible advantage is that the apparatus according to the present invention can more reliably be assembled at the place of final destination, even by persons having a lower degree of technical skills. Any unevenness of the ground can be balanced easier. The invention further provides an apparatus the components of which can be transported to the final destination even through doors. The modular construction makes possible fully automated instruments, not requiring manual intervention during the process of determination of an analyte in a sample in a multistep analysis.

### Brief description of the Figures

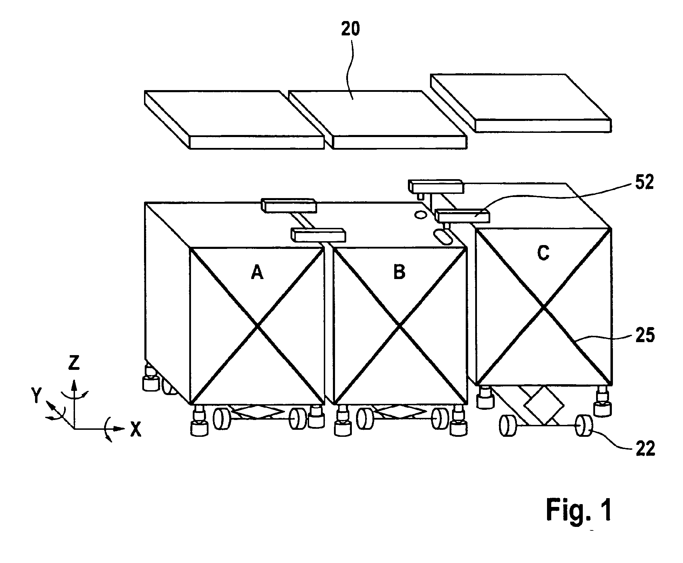

In Figure 1, three carrier elements (A, B, C) and three support modules are schematically shown.

In Figure 2 a to 2 g, an exemplary process for assembly of three support modules (10, 20, 30) on carrier elements (A, B, C), a transfer module (40) and a cover module (53) is shown.

Figure 3 shows an exemplary transfer module in relation to the working areas.

### Detailed description of the invention

In the following, an apparatus is considered to be modular, if it contains two or more constructional elements that are used in assembling the apparatus. These elements are called modules in the following. The modules may or may not be elements having a particular function in the use of the apparatus. Preferably, the modules comprise functional tools, for instance for conducting particular operations in a multistep procedure. The modules can be autonomous or non-autonomous. The functions of the modules can be the same or can be different. The modules can be linked together directly or be independently constructed. Each module can contain tools to perform different operations, including mechanical or optical actions. Furthermore, the modules can require interfering with each other during their actions. Preferably, the modules have functions that are applied in a process in a series, preferably in order to process one or more samples in an analytical process. Exemplary modules are selected from the group of transfer modules, support elements and carrier modules.

A multi-step process is a process having two or more steps. Those steps can be performed in parallel or in a series. In the first case, a number of steps, same or different, are started at the same time. This is called the parallel mode. In the second case, the steps are performed in a series each at a different starting time. This is called the serial mode. In the preferred case, each series of steps is initiated at a different starting time. A very advantageous use of the present invention is found when serial and parallel mode of conducting steps is mixed. This is when performing several processes in parallel, each being composed of a series of subsequently performed steps. Those series of steps can be started at the same time or subsequently. Most preferred multi-step processes involve conducting the multistep procedure in parallel batches, for instance four series of processes are started at the same time, in parallel. After this first batch has undergone the first step and proceeds to the second step, the second batch of parallel processes is started, in the first step.

Analytical processes often require multiple steps during analysis of a sample. Therefore, analytical processes are the particular focus of use of the apparatus of the present invention. An example of such method is the analysis of a sample for a component, i.e. a chemical entity contained in the sample. Samples containing a large number of different components of interest are samples of natural origin. The samples can be solid or liquid. Examples of particular interest are body fluids or liquids derived therefrom. A particularly preferred liquid is blood or its derivatives, like serum and plasma. Further preferred liquids are urine and sputum. A solid sample is swab and tissue.

Analytical processes derive a result from analysis of a sample. Thus, the starting point of the analysis is a given amount of sample. The result mostly is provided as an electronic signal, shown on a display, for instance on a computer screen. While some analyses do not require chemical or mechanical treatment of the sample, most analyses include several steps of treating the sample, including releasing the components to be detected from their microenvironment in the sample, for example release of the component from cells they are associated with. Some analyses also require enrichment of the component to be detected. In another advantageous mode, preferred when other components of the sample interfere with the analysis, the component of interest is isolated and purified from the original sample and thereafter subjected to detection. Some steps of the procedure, like washing to remove impurities, may be repeated once or more times for a better result. The result typically is information given to the person doing the analysis, i.e. on a display, showing the fact of presence or the amount present of one or more components of the sample. ,

Typical analytical processes are clinical, immunological and molecular diagnostic analyses. Each of them requires multiple operational steps. Those steps are preferably selected from the group of adding or removing liquids or solids to the sample or any subsequently produced solids and liquids. Advantageously, those different steps for a number of reasons are done at different locations on the instrument. Those steps may therefore necessitate the transport of the sample or any derivatives thereof from one location to another on the instrument. In view of the fact that it is beneficial to do similar steps at one site and transport the sample as soon as new tools are needed, the steps are grouped together. In immunology, the procedure may comprise sample preparation, separation and detection. In nucleic acid analysis, the steps are preferably selected from the group consisting of sample preparation, amplification and detection. Each of these steps may be composed of complex procedures.

Steps typically used in analyses are selected from the group of aspirating sample or / and reagents, dispensing sample or / and reagents, mixing sample or / and reagents, heating samples or/ and reagents, picking up or / and releasing disposables or / and sample containers, discharging liquids or / and solids, irradiating items, detecting electromagnetic radiation and moving items.

The modular apparatus of the invention preferably has a length of between 1.0 and 5 meters, more preferably between 2 and 4 meters, and most preferably between 2.5 and 3.5 meters and a weight of between 80 and 2000, preferably between 150 and 1200 kg. Preferably, the apparatus has a width of at least 0.5, preferably between 0.8 and 1.5 meters and a height of at least 0.8, preferably between 1.0 and 2.5 meters. Typically, the apparatus of the invention has power supply. Furthermore, it preferably contains storage of all consumables needed for the analysis to be performed in the multistep analysis and one or more waste containers for trash.

The transfer module of the collection of modules of the present invention is a part of the apparatus which is designed to transfer items from one position on the apparatus to another position on the apparatus. Preferably, said transfer module comprises a mechanical unit moving from a first of said support modules to a second of said support modules. Items to be transferred include solids, liquids and disposables. Therefore, the transfer unit preferably contains a mechanical unit for transporting items from a first support module to a second support module. The functions of the transfer unit, and the tools contained within the transfer module, are selected from receiving, maintaining, moving and releasing items.

Preferred liquids are samples to be analyzed, liquids derived from the sample, liquids that contain the analyte to be determined during the process, and suspensions of solids, including solids to which said analyte has been bound. Those liquids are preferably contained within disposables, for instance vessels or pipette tips. Disposables include vessels, pipette tips, caps or reagent bottles. Vessels and pipette tips are known to be useful tools for handling liquids, for example in pipetting apparatus. Both, vessels and pipette tips can be used to transport, to maintain or to mix liquids. Vessels are containers for maintaining liquids or solids, usually made of plastics. Pipette tips are devices having at least two openings, one to enter a liquid, and another to withdraw fluid through the device, such that the liquid is drawn into the device by applying a vacuum. By lowering the pressure in the device, liquid is released from the device. Pipette tips are used in the form of disposable plastics, particularly if the liquid to be aspirated and dispensed should not contaminate samples treated subsequently using the same apparatus. Preferentially, after usage, pipette tips are discarded by releasing them from a socket through which they were attached to the vacuum pumping device. For handling reagents from a reagent container, reusable pipettes or needles can be used. Those pipettes are preferentially made from metal and may be washed with a washing liquid prior to subsequent use with other reagents. Pipetting apparatus are generally known in the art. Usually they contain a pump to apply a vacuum in a controlled manner.

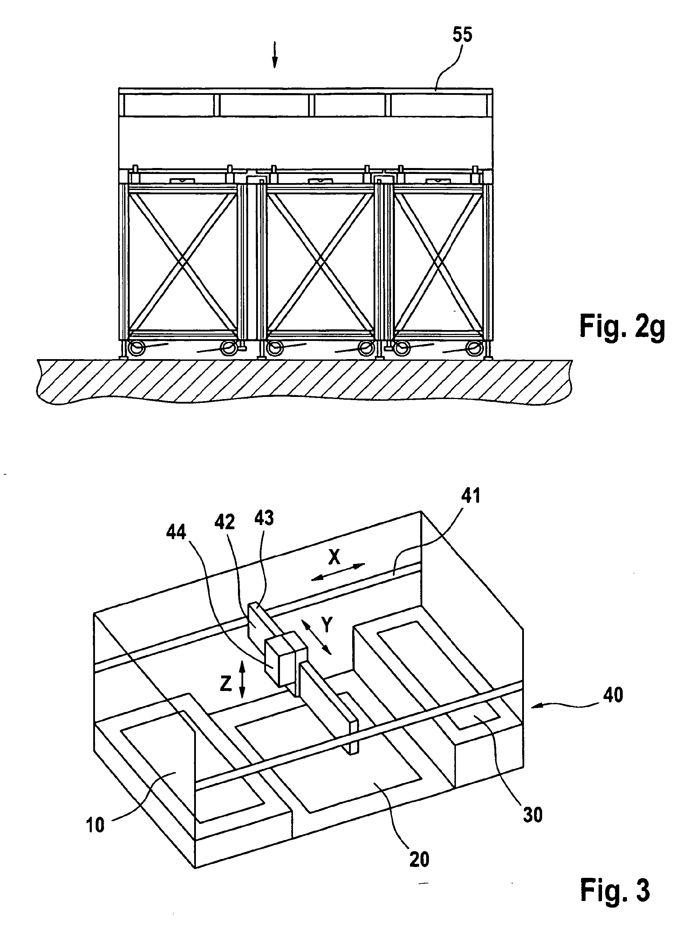

The transfer can be made in any manner, generally by receiving, moving and releasing the item to be transferred. Preferably, the transfer module 40 contains one or more rails (41), on which one or more transfer arms (42) are mounted for horizontal (X) movement of the arm, providing access to one or more support modules. The transfer arm (42) bears at least one transfer head (44) for the transfer of items to be transported within a module and/or from a first module to a second module. Therefor, the transfer head can contain different handling units, for example one or more gripper or socket that are preferably moveable independently in Z-direction. Those transfer heads may include a needle for aspirating/dispensing of fluid, a socket for attaching a disposable pipette tip and/or a gripper for picking up vessels or other disposables or devices. The transfer heads can be moved in any appropriate manner; for instance, they can be driven by a belt drive connected to an electric engine. The transfer can include all three dimensions, X (horizontal, length), Y (horizontal, width) and Z (vertical, height), see figure 3.

In a preferred embodiment, the transfer module comprises at least two transfer arms, each having a gripper for picking up and transferring a vessel and a socket for attaching a pipette tip. These transfer arms are designed to be moveable along a common rail (41), the movement paths of the transfer arms allowing an overlap. This overlap is advantageous in order to operate the instrument such that a series of handling steps can be performed subsequently during the analytical process. For instance, the apparatus according to the present invention can with a first transfer head aspirate an aliquot of a liquid from a first vessel, located in an area to which only the first transfer head has access, transport that aliquot to a location to which the second transfer head has access and dispense that liquid into a vessel at that location. At that location, any desired reagents can be added. Thereafter, the resulting liquid can either be aspirated using a pipette tip attached to a socket on the second transfer head or the vessel containing the liquid can be grabbed using the gripper of the second transfer head and the vessel will be transported to any desired location to which the second transfer head has access. In this way, the transfer heads can work at different stages of the analytical process, involving operations on different support modules, thus enhancing the throughput of the apparatus.

In the present invention, there are preferably three transfer arms mounted on a common transfer rail, each of the transfer arms having an overlap in its movement paths with at least one of the other transfer arm. Each transfer arm contains at least one transfer head. The present invention provides the advantage that all handling units for transporting items from one functional unit (module) of the apparatus to another functional unit are contained in the transfer module and therefore do not need adjustment of their relative movement paths at the time the apparatus is finally assembled.

The transfer module comprises means for firmly connecting said transfer module to at least two support modules and to at least two carrier elements. Those means will be disclosed in detail when describing the support module and the carrier element.

A support module of the collection of modules according to the present invention is a part of the apparatus which comprises tools adapted to keep the items to be subject to analysis and any means needed for the analysis, preferably providing containers for an analytical process. Preferably, a support module has positions for input and output of items, like liquids and disposables. The support module can be accessed by tools on the transfer module, like transfer heads. Preferably, it is itself not designed to actively interact with other support modules. A support module further comprises a working area on which the sample to be analyzed or liquids derived therefrom is handled. This working area preferably means for containing vessels for containing the sample and/or the liquids derived therefrom. Suitable means are containers having a form for safely receiving vessels or other disposables at predefined positions which are accessible to the transfer head, also called racks. Furthermore, it can contain reagents to be used in the analytical process, which may also be contained in containers. Racks may be moveable between different stations on the same or different support modules, transferred by tolls of the transfer module or independently.

Each support module is adapted to be connected to the transfer module. This involves constructional means to position the support module at a precisely defined position in all special dimensions (X, Y, and Z) versus the transfer module. Such means may include guides, nut ands pins. Their geometry, shape or form is chosen to be complimentary to its counterpart on the transfer module. Preferably, the support module and the transfer module comprise corresponding integral engagement elements. In this respect, integral means that the engagement element is a part of the support module or of the transfer module. Engagement means that the element fits into a corresponding element on the other module, respectively. Examples of such integral engagement elements are pins, holes, recesses and projections or protrusions. The integral engagement elements preferably are pins. The counterparts on the transfer module are holes and long holes. The bearing of the transfer is designed according to a tetrahedron-vee-flat coupling, generally known as Lord Kelvin (see Precision Engeneering 25 (2001) 114-127). It will be understood, that the counterparts on the transfer module and the support module can be used vice versa.They may have a shape that allows guiding the support module into the final position versus the transfer module. This can be achieved by inclined surfaces of the elements.

In a preferred embodiment of the present invention, a first support module (10) is designed to accommodate the samples to be analyzed and bring it into a form ready to be analyzed. Such module will in the following be called "sample receiving module". Preferably, it contains an area for accommodating reagents, which is called "reagent input area", an area for input of samples to be analyzed, called "sample input area" and an area containing disposables called "disposable input area". Furthermore, the module comprises an area which is accessible to the transfer head. This area is called "working area". All reagents, samples and disposables are provided in the sample receiving module manifold, particularly, there is sufficient supply of disposables to receive the intended number of aliquots of samples to be analyzed, including controls. Generally, samples and controls are provided in primary containers in an amount sufficient to allow as many analyses as intended. In this module, the mechanical and chemical means for inserting the reagents, keeping the reagents in a defined status, if desired, i.e. at the desired temperature, or keeping any solid particles in a liquid in suspension, inserting containers, for instance racks, containing the samples to be analyzed, storing the required number of disposable vessels and pipette tips, and displaying the items to be handled on the working area are provided. In an exemplary process conducted on the sample receiving module, reagents, samples and disposables are introduced into the module at defined positions. In a first step, a disposable reaction vessel is transported from the disposable storage area to a working position on the working area. This can be done by any means, for example a mechanical elevator for transporting the disposable vessel from the storage to the working area. In a first handling step, an aliquot of the sample is added to the vessel at said working position. If needed or desired, any reagents can be added to the disposable vessel either prior to, concomitantly therewith or subsequently thereto. The handling steps, i.e. aspirating and dispensing of the fluids, according to the present invention, is made by a transfer head mounted to the transfer module as described above.

A second preferred support module is designed to isolate components of the sample from the remaining liquid and any reagents, preferably for separating an analyte from a sample contained in a container, i.e. a vessel. Such module will in the following be called "sample preparation module". This module also displays a working area, which is accessible to a transfer head of the transfer module positions, on which said handling steps are performed. Furthermore, this module may have reagent input areas. In a typical and preferred embodiment, a liquid will be entered into the sample preparation module by transferring a vessel containing said fluid from the output position on the sample receiving module into a sample input position of the sample preparation module or by dispensing said fluid into a vessel located at said sample input position. Possible handling steps on the sample preparation module include maintaining the fluid at a particular temperature, for example, for releasing any components to be analyzed from cellular components of the sample, adding reagents to the fluid, mixing the fluid with reagents under conditions for binding the component to the solid, separating any solid components of the fluid from the remaining liquid or vice versa, washing any solids to which components of the sample have been bound, detaching components from solids to which they were bound and removing parts or all of the fluid contained in a vessel. Such steps can be performed in any order and repeatedly, if desired, to isolate the components from the liquid. In the preferred case, the result of the process performed on the sample preparation module is a liquid containing the analyte or a compound derived from said analyte or a compound indicative of the presence of said analyte in the sample. This fluid is preferably contained in a vessel located in a sample output position.

In a very preferred embodiment, the sample preparation module is designed for isolation of nucleic acids from a sample using binding and detaching the nucleic acids to a solid. In this case, the fluid as received from the sample receiving module contains reagents for lysing cells, i.e. viruses, and glass magnetic particles as well as reagents assisting in binding of nucleic acids to glass surfaces, i.e. chaotropic salts. The vessel containing this mixture is transferred from the sample receiving unit using a first transfer head which is positioned to handle the original sample, the necessary reagents and the disposables to the sample input position on the sample preparation module. The sample input position is kept at elevated temperature, preferably at 37 °C to allow lysis of the cellular components. Then, the mixture is aspirated by a pipette tip mounted on a second transfer head and dispensed into a vessel being kept at another temperature, i.e. 80°C, at a separation position. In this position, the magnetic glass particles are maintained by magnets within the vessel, while the supernatant containing other components of the sample and the reagents can be aspirated and discarded by a second transfer head. In this position, the magnetic particles retained in the vessel are washed, whereby the nucleic acids are retained bound on the magnetic particles. Any wash fluid is discarded by aspirating and dispensing using the transfer head. In the last step, reagents are added to the magnetic beads in the vessel to which the nucleic acids are bound, to detach the nucleic acid from the magnetic particles. The solution containing the purified nucleic acids is separated from the magnetic particles by aspiration into a pipette tip and dispensing into a fresh vessel which is located at a designated output location.

Reagents that are advantageously and preferably stored at the sample preparation module are washing liquid and elution reagent, most preferably already containing reagents for subsequent amplification and/or detection of the components, i.e. the nucleic acids.

A third preferred support module in this embodiment may be a detection module. Such module contains tools for determining electromagnetic signals from a liquid. In a specific embodiment of an apparatus for detecting nucleic acids, the third module is an amplification and detection module. The transfer of the liquid from an output position of the sample preparation module to an input position on the amplification detection module may be done by a transfer head on a third transfer arm, which has an overlapping movement path with the second transfer arm.

This module may be subdivided into two modules, for example if amplification and detection are to be performed in subsequent steps. In the preferred case, in which amplification and detection are done in a so-called homogenous manner, in which no reagents need to be added between the amplification and detection step, one module is sufficient.

In a preferred embodiment, the amplification detection module contains at least one thermocycling position per liquid to be heated in one run. Thermocycles are used to bring a mixture of nucleic acids and amplification reactions to temperatures in a cyclic manner, such that the nucleic acids or parts thereof are amplified. The particularly preferred method for doing such amplification is the Polymerase Chain Reaction, as disclosed in EP 200 362 and EP 201 184. Thermocycling is preferentially done in a computer controlled manner. Therefore, the amplification detection module further comprises computer means to control the temperature adjustment process. Such apparatus is disclosed in EP 236069.

The amplification detection module may further contain containers for receiving liquid and solid waste.

Any detection module or the amplification detection module will further contain means to determine or monitor any properties of the fluid which are dependent upon the presence or the amount of analyte present in the original sample. Preferably, detection modules contain photometer or fluorometer detection instruments. In order to determine the photometric or fluorometric properties of the liquid, the liquid may either be subjected to the detection during amplification, even when the liquid is still in the position used for amplification, or may be transferred to a position in the detection module which is equipped with appropriate detection means, for example light irradiating and light receiving units. Such amplification detection module is disclosed in EP 953379.

A carrier element (A, B and C, respectively) of the collection of modules according to the present invention is a containment designed to carry a support module (10, 20 and 30, respectively). Such containment preferably contains a rigid frame (26) to which the support module is removably fixed. The dimension of the frame is preferably designed to have dimensions such that the module can be contained in full, so that no parts extend to the area outside the frame. In preferable embodiments, the carrier elements have a cuboid outer form and are made up by flanges or posts (24) connected firmly at the corners and rigidified by diagonal crosses (25). Such container has supports for receiving the support module. Preferably, the carrier element further contains means to move the carrier element from one location to another. Preferably, the container has rollers (22) for moving the carrier element on the ground during transport. Preferably, the container further has pillars (23) for final placement of the carrier. In a most preferred embodiment, the rollers can be raised from the surface to depose the carrier element on the ground on the pillars and thus firmly position the carrier element on ground. In this way, the carrier element is in its final placement position.

Furthermore, each carrier element may contain means to join to adjacent carrier elements firmly. This connection can be made through holes and pins of adjacent carrier elements. Then, one of the carrier elements has one or more holes and/or pins, which fit to pins and/or holes of the adjacent carrier element, respectively. Alternatively, the pins are affixed to the frame using a fixation bar (52) bearing a pin at a location that can access and engage to a hole of an adjacent carrier element. In this way, standardized frames can be used to construe all carrier elements used in the assembly. If needed, the carrier elements can further be linked together using screws, nuts and bolts, preferably after fixation using holes and pins as described above.

At least two of the carrier elements comprise carrier spots designed to support the transfer module using corresponding elements on said transfer module. Those carrier elements should be made from a resistive material appropriately to account for the weight of the transfer module. The carrier spots include means to firmly connect or lock the transfer module to the carrier element, such that the transfer module cannot disengage from the carrier element, for instance by screws.

One or more support modules (10, 20, and 30) are provided on a support (21) of said carrier element, preferably such that the support modules can be released from the frame when the carrier elements are in final position, in order to connect the support modules to the transfer module. Preferably, during transportation, the support modules are preferentially firmly fixed to the carrier element. Prior to assembly of the modular apparatus, such firm fixation is unfastened, thus releasing the support module, while the frame of the carrier still supports the support module via the supports. In a preferred embodiment, the supports are compressible. Compressibility can be realized by springs or gum. More preferably, the support is compressible to such extend, that by its weight, the support module squeezes the support down to a position leaving more room to squeeze the compressible support, when the transfer module is placed above the support module, thus further squeezing down the compressible support.

The modular apparatus of the present invention is preferably designed to conduct the multistep analytical process for between 4 and 96, more preferable between 8 and 24, samples in an essentially parallel manner. More preferable, the analysis is done such that each sample is treated in a separate vessel. This has particular advantages for multi-step analytical processes, as needed in fully automated nucleic acid detection processes comprising sample preparation, amplification and detection on one instrument. Such multi-step analytical processes make attractive the use of different modules, each having different functions. Furthermore, the different functions require extended and heavy components. Such apparatuses are difficult to transport due to their weight and dimensions. The modular apparatus of the present invention has the advantage that it can be assembled at the final destination using a particularly advantageous method for manufacture.

The apparatus according to the invention contains two or more, preferably three or more support modules, most preferably 3 support modules. Those support modules can be located in relation to the transfer heads at different distances. Figure 4 shows an embodiment, where the support modules have different heights. Furthermore, the items located on the support module, for instance racks, vessels, pipette tips and others, may be located at different distances from the transfer heads. It may readily be understood that different items may require different mechanisms and thus height of the handling position. Operating such apparatus is accomplished in a convenient manner according to the invention.

Therefore, another subject of the present invention is a method for assembling an apparatus for conducting a multi-step analytical process comprising a transfer module, at least two support modules firmly fixed to said transfer module and at least two carrier elements comprising providing at least two support modules flexibly fixed to said carrier elements, providing said transfer module and placing it onto said carrier elements, connecting the transfer module to said carrier elements and firmly fixing said support modules to said transfer module.

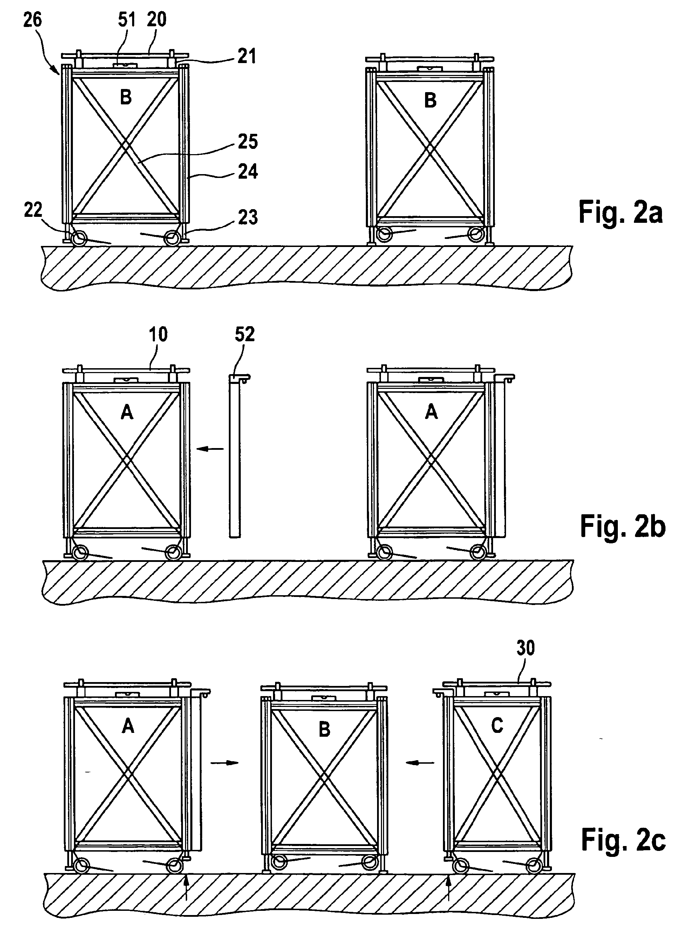

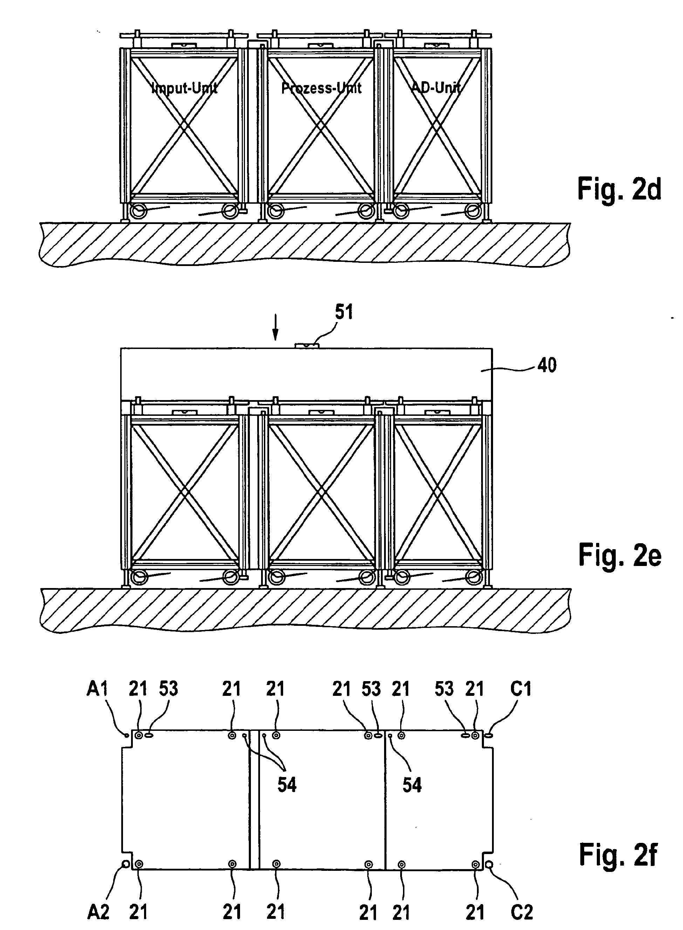

In Figures 2 a to 2 g, an exemplary method for assembly of a modular apparatus is shown. While it is preferred that the assembly is done at the place of final destination of the instrument, the assembly can also be done at the site of manufacture, and the instrument in-toto be transported to its final destination, for instance, if there is enough space on the transport path. The advantages of easy adjustment of the apparatus are applicable in this embodiment, too.

In a first step (shown in Figure 2a, left hand side), a first carrier element (B) is provided. It can be rolled on rollers (22; only one of the rollers is marked for better reading of the figures) to any desired position in the laboratory in which the modular apparatus should be operated. The carrier element (B) is positioned at the desired location (Figure 2a, right hand side) by raising the rollers (22) such that the carrier element is born by the pillars (23; only one of the pillars is marked for better reading of the figures). Support module 20 is only shown as a plate to reduce complexity of the drawing. In reality, support module 20 will extend both upwards and downwards from the plate as shown. The support module is born by compressible supports (21; only one of the supports is marked for better reading of the figures). The carrier element comprises a frame (26), containing posts (24) rigidified by a crossing (25). A level (51) can be provided to level the final horizontal placement.

Figure 2b shows a second carrier element (A) carrying a different support module (10) on its rollers. A fixation bar (52) carrying a pin is attached to the carrier element A in a first step.

Figure 2c shows how two carrier elements (A) and (C), each carrying a pin, are approached to carrier element B such that the pins fit into holes of carrier element B on rollers. Carrier element C carrier a third support module (30).

Figure 2d shows the final assembly of carrier elements A, B and C, wherein all rollers were raised, and the pins on carrier elements A and C are locked into holes of carrier element B, such that the assembly is located on pillars of each of carrier elements A, B and C. The assembly is adjusted to be even using double levels, particularly in Y-direction, such that the carrier elements are not distorted against each other. In this way, the carrier elements are roughly adjusted. Furthermore, it is possible to adjust the position of said compressible support on said carrier elements in Z-direction to adjust the final position of said transfer module prior to placing said transfer module onto said carrier elements.

In the next step, shown in Figure 2e, the transfer module (40) is placed onto supports on three carrier elements. Those supports are called carrier spots (41) in the following.
Preferably, those carrier spots are placed at the outer corners of the outmost carrier elements. Most preferably, the transfer module is placed on three or four carrier spots , to allow fixation of the transfer module relative to the carrier elements.

Figure 2f shows a preferred embodiment of arrangement of carrier spots. The carrier spots preferably are one flat bearing (A1, C1) and two pins (A2, C2). The counterparts on the transfer module are flat bearings (TA1, TC1), a hole (TA2) and a long hole (TC2). The bearing of the transfer is designed according to a tetrahedron-vee-flat coupling, generally known as Lord Kelvin (see Precision Engeneering 25 (2001) 114-127). It will be understood, that the counterparts on the transfer module and the carrier module can be used vice versa.

Finally, the transfer module essentially covers the part of the carrier elements that include a working area of any support module.

The geometry of the supports (21) for carrying the support modules (10, 20 and 30), the integral engagement elements (53, 54) and the carrier spots (A1, A2, C1, C2) are shown in Figure 2 f. Preferably, the transfer module is additionally fixed to the carrier elements A and C by screws through carrier spots A1, A2, C1 and C2. At this point in time, the support modules (10, 20, 30) are each located at a short distance below the transfer module or anchors attached thereto.

In the next step, the support modules (10, 20, and 30) are firmly connected to the transfer module. This is preferably done by attaching the support modules to the transfer module, preferably using anchors, on the bottom of the transfer module, for example by bolts. In order to achieve this, it is preferred that the distance between the support modules and the anchors in the transfer module is very short. Most preferred, the integral engagement elements are already located at their final position when the transfer module has been placed upon the carrier element assembly. This can be achieved by using compressible supports on the carrier elements that together with the support module placed thereon are further depressed when placing the transfer module onto the assembly. The supports can be preadjusted prior to placing the transfer module, for instance by changing the spring length or form. Most preferably, the support modules are buoyantly supported. In this case, the support modules are located on said carrier elements such that when the transfer module is placed on said carrier elements, said support modules touch the anchors of the transfer module and can easily be connected therewith. Thus, a preferred embodiment of the invention is the attachment of the support modules to the transfer module from underneath. To illustrate this further, the support modules would be hanging from the transfer module, if there would not be the support from the compressible supports of the carrier elements.

After the transfer module has been added, additional modules can be added, for example a cover (53) or further equipments. If desired, the whole assembly can be further fixed. The final apparatus is shown in Figure 2g.

In figure 3 there is schematically shown a transfer module 40 with a transfer head 44 mounted on a transfer arm (42) movable on rails 41 and 43. Thus, the handling units are moveable in the three dimensions X, Y, and Z. The head can access three different working areas (represented by support modules 10, 20 and 30), each having a different dimension, i.e. height and length.

The apparatus of the present invention is characterized by the fact, that the elements which are most sensitive to exact positioning during assembly of the complete apparatus are already in a pre-assembled status, while the modules, the tools of the transfer module interact with and which have a heavy weight, can be attached to the transfer unit in a very convenient and exact manner, even on uneven ground. Furthermore, it is not necessary that the working areas of these different support modules are located on a common plane. This is achieved by using a transfer module the tools on which can freely move in all three spatial directions (X, Y, Z), for instance a transfer head. The present invention also improves the situation, wherein the tools of the transfer module may have changed their form during use, as it provides more preciseness from the start.

In order to further improve exact access of the transfer head(s) to the items located on the working areas, the transfer head(s) can additionally calibrated in a relative manner. This is preferably done by defining at least one calibration position on each working area which can be recognized by the transfer head. This can be achieved by appropriate sensing means, for instance, using laser sensors. The calibration position is used as a reference point for defining the other positions in the same working area accessed by the transfer head(s), for example positions where vessels are located, or sample input or output positions. The use of shorter distances between calibration positions and operation positions makes the process even more precise.

Another subject of the invention is a method for analysis of a component in a sample using an apparatus according to the present invention. This method particularly comprises placing the sample on a first working area of a first support module of said apparatus, transferring the sample or a liquid derived therefrom to a working area of a second support module using a tool of a transfer module of said apparatus, and analyzing the sample or a liquid derived therefrom on a working area of said second or a third support module.

### Reference numerals list

- 1: Apparatus
- 10: Support module (sample input area)
- 20: Support module (sample preparation area)
- 21: Support
- 22: Roller
- 23: Pillar
- 24: Post
- 25: Cross
- 26: Frame
- 30: Support module (amplification and detection area)
- 40: Transfer module
- 41: Rail for movement in X direction
- 42: Transfer arm
- 43: Rail for movement in Y direction
- 44: Transfer head
- 51: Level
- 52: Fixation bar
- 53: Long hole (integral engagement elements)
- 54: Hole (integral engagement elements)
- A: Carrier element for 10
- A1: Flat bearing (carrier spot)
- A2: Pin (carrier spot)
- B: Carrier element for 20
- C: Carrier element for 30
- C1: Flat bearing (carrier spot)
- C2: Pin (carrier spot)
- TA1: Flat bearing
- TA2: Hole
- TC1: Flat bearing
- TC2: Long hole

## Claims

1. A collection of modules for assembling an analytical apparatus for conducting a multi-step analytical process comprising
- at least two carrier elements which can be positioned adjacent on the ground,
- at least two support modules comprising tools adapted to keep the items to be subject to analysis and any means needed for the analysis,
- supports on each of said carrier elements for supporting each of said at least two support modules onto a carrier element,
- a transfer module designed to transfer items from one position to another position,
- carrier spots on the carrier elements for bearing the transfer module on the carrier elements and means for additionally fixing the transfer module to the carrier elements,
said collection of modules being **characterized in that** the supports for supporting the support modules onto the carrier elements are arranged so that the support modules are either firmly fixed to the carrier elements or released but still supported by the carrier elements via the supports when said firm fixation is unfastened and **in that** the support modules and the transfer module comprise corresponding integral engagement elements to exactly position and firmly connect said support modules in relation to said transfer module.

2. The collection of modules according to claim 1, **characterized in that** said transfer module is supported by said carrier elements at either 3 or 4 carrier spots when said collection of modules is assembled to form an analytical apparatus.

3. The collection of modules of any of claims 1 to 2 suitable for assembling an analytical apparatus having a length of at least 1.00 meter.

4. The collection of modules according to any of claims 1 to 3, wherein said transfer module comprises a mechanical unit for moving items from a first position of said support modules to a second position of said support modules when said collection of modules is assembled to form an analytical apparatus,

5. The collection of modules of claim 4, **characterized in that** said mechanical unit is composed of at least two individual transport heads mounted for horizontal movement on a rail reaching from said first to said second support module.

6. The collection of modules of any of claims 1 to 5, **characterized in that** a first of said support modules is a module providing containers for the analytical process.

7. The collection of modules of any of claims to 6, **characterized in that** a second support module is a module for separation of an analyte from a sample using said container.

8. The collection of modules of any of claims 1 to 7, **characterized in that** a further support module is a module for determining electromagnetic signals from a liquid.

9. The collection of modules of any of claims 1 to 8, **characterized in that** the weight of each of said first and second support modules is more than 10 kilograms.

10. The collection of modules of any of claims 1 to 9, **characterized in that** the length of said carrier modules is at least 0.5 meters.

11. An apparatus for conducting a multi-step analytical process assembled from the collection of modules according to any one of claims 1 to 10 comprising
- at least two carrier elements which can be positioned adjacent on the ground,
- at least two support modules comprising tools adapted to keep the items to be subject to analysis and any means needed for the analysis,
- supports on each of said carrier elements for supporting each of said at least two support modules onto a carrier element,
- a transfer module designed to transfer items from one position on the apparatus to another position on the apparatus,
- carrier spots on the carrier elements for bearing the transfer module on the carrier elements and means for additionally fixing the transfer module to the carrier elements,
said apparatus being **characterized in that** the supports for supporting the support modules onto the carrier elements are arranged so that the support modules are either firmly fixed to the carrier elements or released but still supported by the carrier elements via the supports when said firm fixation is unfastened and **in that** the support modules and the transfer module comprise corresponding integral engagement elements to exactly position and firmly connect said support modules in relation to said transfer module.

12. A method for assembling the collection of modules according to any of claims 1 to 10 to form an analytical apparatus for conducting an analytical process, said method comprising the steps
- providing at least two support modules on supports of the at least two carrier elements,
- providing the transfer module and placing it onto carrier spots of the carrier elements, and
- firmly connecting said support modules to said transfer module.

13. The method of claim 12 **characterized in that** said support modules are provided on compressible supports on said carrier elements.

14. The method of any of claims 12 to 13 further comprising adjusting the position of at least one carrier spot on said carrier elements in Z-direction to adjust the final position of said transfer module prior to placing said transfer module onto said carrier elements.

15. The method of any of claims 13 to 14 further comprising adjusting the position of said compressible support on said carrier elements in Z-direction to adjust the final position of said transfer module prior to placing said transfer module onto said carrier elements.

16. The method of any of claims 12 to 15 further comprising firmly connecting the transfer module to the carrier elements.

17. A method for multistep analysis of a component of a sample using an apparatus assembled from the collection of modules according to any of claims 1 to 10.

## Patentansprüche

1. Ansammlung von Modulen zum Zusammenfügen einer Analysevorrichtung zur Durchführung eines aus mehreren Schritten bestehenden Analyseprozesses mit Folgendem:
- mindestens zwei Trägerelementen, die nebeneinander auf dem Boden positioniert werden können,
- mindestens zwei Stützmodulen, die Werkzeuge umfassen, welche dazu ausgeführt sind, die zu analysierenden Objekte und jegliche Mittel, die zur Analyse erforderlich sind, zu halten,
- Stützen auf jedem der Trägerelemente zum Stützen jedes der mindestens zwei Stützmodule auf einem Trägerelement,
- einem zur Übertragung von Objekten von einer Position zur anderen Position ausgeführtes Transfermodul,
- Trägerstellen auf den Trägerelementen zum Lagern des Transfermoduls auf den Trägerelementen und von Mitteln zur zusätzlichen Befestigung des Transfermoduls an den Trägerelementen,
**dadurch gekennzeichnet, dass** die Stützen zum Abstützen der Stützmodule auf den Trägerelementen so angeordnet sind, dass die Stützmodule entweder fest an den Trägerelementen angebracht sind oder freigegeben sind, aber immer noch durch die Trägerelemente über die Stützen gestützt werden, wenn die feste Anbringung gelöst wird, und dass die Stützmodule und das Transfermodul entsprechende integrale Eingriffselemente zur genauen Positionierung und festen Verbindung der Stützmodule bezüglich des Transfermoduls umfassen.

2. Ansammlung von Modulen nach Anspruch 1, **dadurch gekennzeichnet, dass** das Transfermodul durch die Trägerelemente entweder an 3 oder an 4 Trägerstellen gestützt wird, wenn die Ansammlung von Modulen zur Bildung einer Analysevorrichtung zusammengefügt ist.

3. Ansammlung von Modulen nach einem der Ansprüche 1 bis 2, die zum Zusammenfügen einer Analysevorrichtung mit einer Länge von mindestens 1,00 Meter geeignet ist.

4. Ansammlung von Modulen nach einem der Ansprüche 1 bis 3, wobei das Transfermodul eine mechanische Einheit zum Bewegen von Objekten aus einer ersten Position der Stützmodule in eine zweite Position der Stützmodule, wenn die Ansammlung von Modulen zur Bildung einer Analysevorrichtung zusammengefügt ist, umfasst.

5. Ansammlung von Modulen nach Anspruch 4, **dadurch gekennzeichnet, dass** die mechanische Einheit aus mindestens zwei einzelnen Transportköpfen besteht, die zur horizontalen Bewegung auf einer vom ersten zum zweiten Stützmodul reichenden Schiene angebracht sind.

6. Ansammlung von Modulen nach einem der Ansprüche 1 bis 5, **dadurch gekennzeichnet, dass** ein erstes der Stützmodule ein Modul ist, das Behältnisse für den Analyseprozess bereitstellt.

7. Ansammlung von Modulen nach einem der Ansprüche 1 bis 6, **dadurch gekennzeichnet, dass** ein zweites Stützmodul ein Modul zur Trennung eines Analyts von einer Probe unter Verwendung des Behältnisses ist.

8. Ansammlung von Modulen nach einem der Ansprüche 1 bis 7, **dadurch gekennzeichnet, dass** ein weiteres Stützmodul ein Modul zur Ermittlung elektromagnetischer Signale von einer Flüssigkeit ist.

9. Ansammlung von Modulen nach einem der Ansprüche 1 bis 8, **dadurch gekennzeichnet, dass** das Gewicht des ersten und des zweiten Stützmoduls mehr als 10 Kilogramm beträgt.

10. Ansammlung von Modulen nach einem der Ansprüche 1 bis 9, **dadurch gekennzeichnet, dass** die Länge der Trägermodule mindestens 0,5 Meter beträgt.

11. Vorrichtung zur Durchführung eines aus mehreren Schritten bestehenden Analyseprozesses, die aus der Ansammlung von Modulen nach einem der Ansprüche 1 bis 10 zusammengefügt ist, mit:
- mindestens zwei Trägerelementen, die nebeneinander auf dem Boden positioniert werden können,
- mindestens zwei Stützmodulen, die Werkzeuge umfassen, welche dazu ausgeführt sind, die zu analysierenden Objekte und jegliche Mittel, die zur Analyse erforderlich sind, zu halten,
- Stützen auf jedem der Trägerelemente zum Stützen jedes der mindestens zwei Stützmodule auf einem Trägerelement,
- einem zur Übertragung von Objekten von einer Position zur anderen Position ausgeführtes Transfermodul,
- Trägerstellen auf den Trägerelementen zum Lagern des Transfermoduls auf den Trägerelementen und von Mitteln zur zusätzlichen Befestigung des Transfermoduls an den Trägerelementen,
**dadurch gekennzeichnet, dass** die Stützen zum Abstützen der Stützmodule auf den Trägerelementen so angeordnet sind, dass die Stützmodule entweder fest an den Trägerelementen angebracht sind oder freigegeben sind, aber immer noch durch die Trägerelemente über die Stützen gestützt werden, wenn die feste Anbringung gelöst wird, und dass die Stützmodule und das Transfermodul entsprechende integrale Eingriffselemente zur genauen Positionierung und festen Verbindung der Stützmodule bezüglich des Transfermoduls umfassen.

12. Verfahren zum Zusammenfügen der Ansammlung von Modulen nach einem der Ansprüche 1 bis 10 zur Bildung einer Analysevorrichtung zur Durchführung eines Analyseprozesses, wobei das Verfahren die folgenden Schritte umfasst:
- Bereitstellen mindestens zweier Stützmodule auf Stützen der mindestens zwei Trägerelemente,
- Bereitstellen des Transfermoduls und sein Platzieren auf Trägerstellen der Trägerelemente und
- festes Verbinden der Trägermodule mit dem Transfermodul.

13. Verfahren nach Anspruch 12, **dadurch gekennzeichnet, dass** die Stützmodule an komprimierbaren Stützen der Trägerelemente vorgesehen sind.

14. Verfahren nach einem der Ansprüche 12 bis 13, das weiterhin das Einstellen der Position mindestens einer Trägerstelle an den Trägerelementen in Z-Richtung zur Einstellung der Endposition des Transfermoduls vor dem Platzieren des Transfermoduls an den Trägerelementen umfasst.

15. Verfahren nach einem der Ansprüche 13 bis 14, das weiterhin das Einstellen der Position der komprimierbaren Stütze an den Trägerelementen in Z-Richtung zum Einstellen der Endposition des Transfermoduls vor dem Platzieren des Transfermoduls auf den Trägerelementen umfasst.

16. Verfahren nach einem der Ansprüche 12 bis 15, das weiterhin das feste Verbinden des Transfermoduls mit den Trägerelementen umfasst.

17. Verfahren für eine aus mehreren Schritten bestehende Analyse einer Komponente einer Probe unter Verwendung einer aus der Ansammlung von Modulen nach einem der Ansprüche 1 bis 10 zusammengefügten Vorrichtung.

## Revendications

1. Assemblage de modules destiné à assembler un appareil analytique destiné à réaliser un traitement analytique à étapes multiples comprenant
- au moins deux éléments porteurs qui peuvent être positionnés de manière adjacente sur le sol,
- au moins deux modules de support comprenant des outils adaptés pour maintenir les articles devant être soumis à l'analyse et tous moyens quelconques nécessaires pour l'analyse,
- des supports sur chacun desdits éléments porteurs destinés à supporter chacun desdits au moins deux modules de support sur un élément porteur,
- un module de transfert conçu pour transférer les articles d'une position à une autre position,
- des points porteurs sur les éléments porteurs destinés à supporter le module de transfert sur les éléments porteurs et des moyens pour fixer de plus le module de transfert sur les éléments porteurs,
ledit assemblage de modules étant **caractérisé en ce que** les supports destinés à supporter les modules de support sur les éléments porteurs sont agencés de sorte que les modules de support sont soit fermement fixés aux éléments porteurs soit libérés mais toujours supportés par les éléments porteurs via les supports lorsque ladite fixation ferme est détachée et **en ce que** les modules de support et le module de transfert comprennent des éléments de mise en prise solidaires correspondants pour positionner avec exactitude et connecter fermement lesdits modules de support par rapport audit module de transfert.

2. Assemblage de modules selon la revendication 1, **caractérisé en ce que** ledit module de transfert est supporté par lesdits éléments porteurs au niveau de 3 ou 4 points porteurs lorsque ledit assemblage de modules est assemblé pour former un appareil analytique.

3. Assemblage de modules selon l'une quelconque des revendications 1 à 2 convenant à l'assemblage d'un appareil analytique présentant une longueur d'au moins 1,00 mètre.

4. Assemblage de modules selon l'une quelconque des revendications 1 à 3, dans lequel ledit module de transfert comprend une unité mécanique destinée à déplacer des articles d'une première position desdits modules de support à une deuxième position desdits modules de support lorsque ledit assemblage des modules est assemblé pour former un appareil analytique.

5. Assemblage de modules selon la revendication 4, **caractérisé en ce que** ladite unité mécanique est composée d'au moins deux têtes de transport individuelles montées pour un déplacement horizontal sur un rail allant dudit premier audit deuxième module de support.

6. Assemblage de modules selon l'une quelconque des revendications 1 à 5, **caractérisé en ce qu'**un premier parmi lesdits modules de support est un module fournissant des récipients pour le traitement analytique.

7. Assemblage de modules selon l'une quelconque des revendications 1 à 6, **caractérisé en ce qu'**un deuxième module de support est un module pour la séparation d'une substance à analyser d'un échantillon en utilisant ledit récipient.

8. Assemblage de modules selon l'une quelconque des revendications 1 à 7, **caractérisé en ce qu'**un module de support supplémentaire est un module destiné à déterminer les signaux électromagnétiques provenant d'un liquide.

9. Assemblage de modules selon l'une quelconque des revendications 1 à 8, **caractérisé en ce que** le poids de chacun desdits premier et deuxième modules de support est supérieur à 10 kilogrammes.

10. Assemblage de modules selon l'une quelconque des revendications 1 à 9, **caractérisé en ce que** la longueur desdits modules porteurs est d'au moins 0,5 mètre.

11. Appareil destiné à réaliser un traitement analytique à étapes multiples assemblé à partir de l'assemblage de modules selon l'une quelconque des revendications 1 à 10 comprenant
- au moins deux éléments porteurs qui peuvent être positionnés de manière adjacente sur le sol,
- au moins deux modules de support comprenant des outils adaptés pour maintenir les articles devant être soumis à l'analyse et tous moyens quelconques nécessaires pour l'analyse,
- des supports sur chacun desdits éléments porteurs destinés à supporter chacun desdits au moins deux modules de support sur un élément porteur,
- un module de transfert conçu pour transférer les articles d'une position sur l'appareil à une autre position sur l'appareil,
- des points porteurs sur les éléments porteurs destinés à supporter le module de transfert sur les éléments porteurs et des moyens pour fixer de plus le module de transfert sur les éléments porteurs,
ledit appareil étant **caractérisé en ce que** les supports destinés à supporter les modules de support sur les éléments porteurs sont agencés de sorte que les modules de support sont soit fermement fixés aux éléments porteurs soit libérés mais toujours supportés par les éléments porteurs via les supports lorsque ladite fixation ferme est détachée et **en ce que** les modules de support et le module de transfert comprennent des éléments de mise en prise solidaires correspondants pour positionner avec exactitude et connecter fermement lesdits modules de support en liaison avec ledit module de transfert.

12. Procédé destiné à assembler l'assemblage de modules selon l'une quelconque des revendications 1 à 10 pour former un appareil analytique destiné à réaliser un traitement analytique, ledit procédé comprenant les étapes de
- prévoyance d'au moins deux modules de support sur les supports des au moins deux éléments porteurs,
- prévoyance du module de transfert et son placement sur les points porteurs des éléments porteurs, et
- connexion ferme desdits modules de support audit module de transfert.

13. Procédé selon la revendication 12, **caractérisé en ce que** lesdits modules de support sont prévus sur des supports compressibles sur lesdits éléments porteurs.

14. Procédé selon l'une quelconque des revendications 12 à 13 comprenant en outre l'ajustement de la position d'au moins un point porteur sur lesdits éléments porteurs dans le sens Z pour ajuster la position finale dudit module de transfert avant de placer ledit module de transfert sur lesdits éléments porteurs.

15. Procédé selon l'une quelconque des revendications 13 à 14 comprenant en outre l'ajustement de la position dudit support compressible sur lesdits éléments porteurs dans le sens Z pour ajuster la position finale dudit module de transfert avant de placer ledit module de transfert sur lesdits éléments porteurs.

16. Procédé selon l'une quelconque des revendications 12 à 15 comprenant en outre la connexion ferme du module de transfert sur les éléments porteurs.

17. Procédé pour analyse à étapes multiples d'un composant d'un échantillon en utilisant un appareil assemblé à partir de l'assemblage de modules selon l'une quelconque des revendications 1 à 10.
